(19) Europäisches Patentamt
European Patent Office
Office européen des brevets

(11) **EP 3 448 041 A1**

(12) **EUROPEAN PATENT APPLICATION**
published in accordance with Art. 153(4) EPC

(43) Date of publication:
**27.02.2019 Bulletin 2019/09**

(21) Application number: **17849863.0**

(22) Date of filing: **13.07.2017**

(51) Int Cl.:
*H04N 21/2187* (2011.01)    *H04N 21/845* (2011.01)
*H04N 21/8547* (2011.01)    *H04N 21/43* (2011.01)
*H04N 21/6587* (2011.01)

(86) International application number:
**PCT/CN2017/092764**

(87) International publication number:
**WO 2018/232795 (27.12.2018 Gazette 2018/52)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **19.06.2017   CN 201714661153**

(71) Applicant: **Wangsu Science & Technology Co., Ltd.**
**Shanghai 200030 (CN)**

(72) Inventors:
• **CHEN, Hong**
  **Shanghai 200030 (CN)**
• **LV, Shibiao**
  **Shanghai 200030 (CN)**

(74) Representative: **Hanna Moore + Curley**
**Garryard House**
**25/26 Earlsfort Terrace**
**Dublin 2, D02 PX51 (IE)**

(54) **VIDEO PLAYER CLIENT, SYSTEM, AND METHOD FOR LIVE BROADCAST VIDEO SYNCHRONIZATION**

(57)    A system, a player client terminal, and a method for implementing live video synchronization are provided. The system includes a live video source, a video server, and a player client terminal. The live video source is configured to push a video stream to the video server. The video server is configured to slice the video stream into video segments, and to assign a video sequence number to each sliced video segments in a chronological order. The player client terminal is configured to maintain synchronizing with video sequence number in the video server and to download video segments to be played from the video server. Based on a first sequence number of the latest synchronized video segment, a second sequence number of the most recently downloaded video segment, and a third sequence number of the currently played video segment, the player client terminal determines a target video segment, jumps to the target video segment, and continues to play. The present disclosure reduces video server workload, and ensures real-time live video streaming.

FIG. 1

Printed by Jouve, 75001 PARIS (FR)

## Description

FIELD OF THE DISCLOSURE

The present disclosure generally relates to the live streaming technology and, more particularly, relates to a player client terminal, a system and a method for implementing live video synchronization.

BACKGROUND

With the continuous advancement of the communication technology, the nascent live video streaming industry is showing great potential. Currently, a live video service is often provided by a live broadcast system platform, which connects to both a main broadcast client terminal and a plurality of user client terminals. As a source of the live video, the main broadcast client terminal may record live content and push in real-time the recorded content to a server of the live broadcast system platform simultaneously. Then, the user client terminal may obtain the live video content pushed by the main broadcast client terminal from the server of the live broadcast system platform. This is an exemplary process of pushing and viewing live video content.

Presently, the live broadcast system often has the following problems: 1. When downloading the live video content, the user client terminal may sometimes be unable to obtain the current live video content for a period of time due to network disruptions. In this way, the user client terminal may suffer pausing and buffering of live video content. When the pausing and buffering occur multiple times, without a pertaining catch-up mechanism, the user terminal may see delayed live video content falling further and further behind the real-time live video streaming pushed by the main broadcast client terminal. Thus, the user experience is substantially degraded. 2. When the live video streaming pushed by the main broadcast client terminal is disrupted by network fluctuations, the user client terminal may be unable to obtain the live video content, and may initiate a back-to-source request to the live video streaming server. When a large number of user client terminals initiate the back-to-source requests at the same time, the load on the live video streaming server may increase rapidly. Because network fluctuations occur frequently, the live video streaming server in the existing technology may frequently receive a large number of back-to-source requests, and may be subject to substantial load surges. Thus, the server maintenance cost may be increased.

BRIEF SUMMARY OF THE DISCLOSURE

To solve issues in the existing technology, the present disclosure provides a player client terminal, a system and a method for implementing live video synchronization. The technical solutions are as follows.

One aspect of the present disclosure provides a player client terminal for implementing live video synchronization, the player client terminal keeps communication connection with the video server. The player client terminal is configured to keep synchronizing with a video sequence number in the video server where each video sequence number corresponds to a video segment. The player client terminal downloads a video segment to be played from the video server. Based on a first sequence number of the latest synchronized video segment, a second sequence number of the most recently downloaded video segment, and a third sequence number of the currently played video segment, the player client terminal determines a target video segment to jump to, jumps from the currently played video segment to the target video segment, and continues to play.

Another aspect of the present disclosure provides a system for implementing live video synchronization, comprising a live video source, configured to push a video stream to the video server, a video server configured to slice the video stream into video segments, and to assign a video sequence number to each sliced video segment in a chronological order, and a player client terminal configured to keep synchronizing with a video sequence number in the video server wherein each video sequence number corresponds to a video segment. The player client terminal downloads video segments to be played from the video server. Based on a first sequence number of the latest synchronized video segment, a second sequence number of the most recently downloaded video segment, and a third sequence number of the currently played video segment, the player client terminal determines a target video segment to jump to, jumps from the currently played video segment to the target video segment, and continues to play.

Another aspect of the present disclosure provides a method for implementing live video synchronization, comprising pushing a video stream from a live video source to a video server; the video server slicing the video stream into video segments, and assigning a video sequence number to each video segment after slicing in a chronological order; keeping synchronizing a player client terminal with the video sequence number in the video server, and downloading a video segment to be played from the video server to the player client terminal; and the player client terminal, based on a first sequence number of the latest synchronized video segment, a second sequence number of the most recently downloaded video segment, a third sequence number of the currently played video segment, determining a target video segment to jump to, jumping from the currently played video segment to the target video segment, and continuing to play.

Therefore, in the present disclosure, the video server may slice the video stream pushed by the live video source and may assign sequence numbers to the sliced video segments in the chronological order. Based on the sequence number of the video segment, the location of the video segment in the entire video stream may be determined. When the player client terminal plays the live video content, the player client terminal may keep synchronizing with the video sequence number in the video server. Thus, the player client terminal may store the first sequence number of the latest synchronized video segment. In addition, when the player client terminal downloads the video segment from the video server, the player client terminal may record the second sequence number of the most recently downloaded video segment. At the same time, when the player client terminal plays the video segments in the chronological order, the player client terminal may record the third sequence number of the currently played video segment. In the present disclosure, after the first sequence number, the second sequence number, and the third sequence number are analyzed, the target video segment to be played currently may be determined. The target video segment determined in this way may keep a certain delay with the video segment that is most recently assigned with a sequence number in the video server. Thus, after the target video segment is determined, the player client terminal may jump directly from the currently played video segment to the target video segment to constantly ensure that the currently played video segment keep a certain delay with the video segment that is most recently assigned with a sequence number in the video server. As such, the player client terminal may always stay in the state of playing video segments, and may not initiate any invalid back-to-source request to the video server result from no video data can be retrieved so that the workload of the video server may be reduced. In addition, because the currently played video segment keeps a certain delay with the video segment that is most recently assigned with a sequence number in the video server, the video server may have sufficient time to complete the auditing of the video stream pushed from the live video source to ensure the legitimacy of the content played by the player client terminal. Moreover, when the player client terminal pauses due to network fluctuation, the player client terminal may automatically jump to the new target video segment for downloading and playing. Thus, the accumulated delay at the player client terminal due to network fluctuation may be avoided, and the user experience may be improved effectively.

## BRIEF DESCRIPTION OF THE DRAWINGS

To more clearly illustrate the technical solution in the present disclosure, the accompanying drawings need to be used in the description of the disclosed embodiments are briefly described hereinafter. Obviously, the drawings described below are merely some embodiments of the present disclosure. Other drawings derived from such drawings may be obtained by a person having ordinary skill in the art without creative labor.

FIG. 1 is a schematic diagram of an exemplary system architecture for implementing live video synchronization according to Embodiment 1 of the present disclosure;

FIG. 2 is a schematic view of an exemplary video segment according to Embodiment 1 of the present disclosure; and

FIG. 3 is a flow chart of an exemplary method for implementing live video synchronization according to Embodiment 3 of the present disclosure.

## DETAILED DESCRIPTION

To make the objectives, technical solutions and advantages of the present disclosure clearer, embodiments of the present disclosure will be made in detail with reference to the accompanying drawings hereinafter.

## Embodiment 1

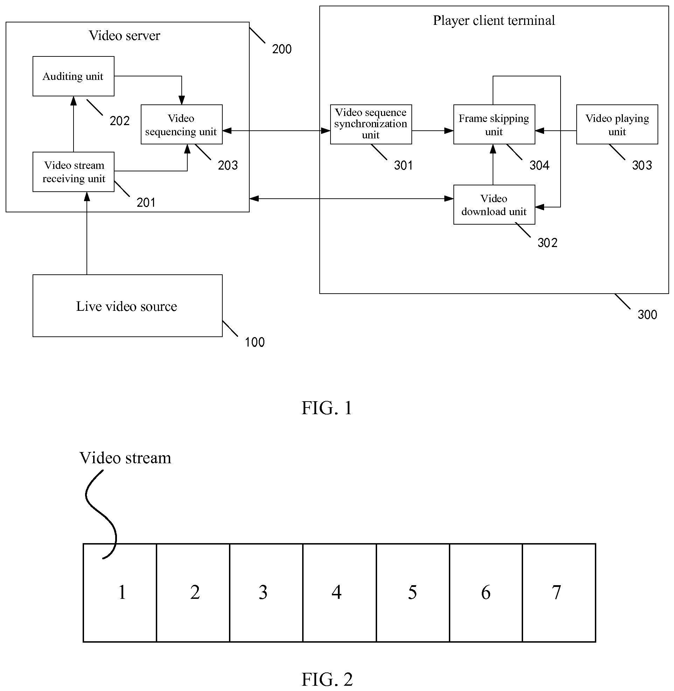

The present disclosure provides a system for implementing live video synchronization. Referring to FIG. 1, the system may include a live video source 100, a video server 200, and a player client terminal 300. The live video source 100 may be a main broadcast client terminal that distributes live video content. The live video source 100 may also be an electronic device with camera function and network communication function. For example, the live video source 100 may be a computer (desktop computer or laptop computer), a smart phone, a tablet computer, or a smart wearable device, etc. The video server 200 may be a service server, for example, the background server of the live broadcast platforms such as Douyu, Huya, and Zhanqi, etc. For example, the player client terminal 300 may be an electronic device with video playing function, which is used by the user. For example, the player client terminal may be a computer (desktop computer or laptop computer), a smart phone, a tablet computer, and a smart wearable device, etc. The player client may also be software installed in the said electronic devices. For example, the player client terminal may be a smart phone mobile application (app) from live broadcast platforms such as Douyu, Huya, and Zhanqi, etc.

In the present embodiment, the live video source 100 may be used to push video stream to the video server 200. After receiving the video stream, the video server 200 may slice the video stream into segments. Specifically, referring to FIG. 2, the video server 200 may slice the video stream according to a fixed time interval or a fixed number of frames. For example, the video server 200 may slice the video stream into video segments every 20 seconds or every 100 frames. In this way, the video server 200 may slice the received video stream into a plurality of video segments. In the present embodiment, when slicing the video stream into the video segments, each video segment may be assigned with a sequence number in a chronological order. Specifically, the chronological order may be a sequence in which the video stream is played. The video segment that is played later may correspond to a bigger sequence number.

Referring to FIG. 1, in the present embodiment, the video server 200 may include a video stream receiving unit 201, an auditing unit 202, and a video sequencing unit 203. The video stream receiving unit 201 may be used to receive the video stream from the live video source 100, and to send the video stream to the auditing unit 202 and the video sequencing unit 203, respectively. The video sequencing unit 203 may be used to slice the video stream, and to assign video sequence numbers to the sliced video segment in the chronological order. The auditing unit 202 may be used to recognize content of each frame of the video stream to determine whether any prohibited content appears in the video stream. Specifically, the auditing unit 202 may compare the content of each frame with the contents in the prohibited content database. When the similarity exceeds a specified threshold, the content in the current frame may be determined to be prohibited. In actual application scenario, an eigenvector may be extracted from each frame. Each element in the eigenvector may be, for example, a pixel value for each pixel of the image frame. At the same time, the images in the prohibited content database may be represented in form of eigenvectors. In this way, after the eigenvector corresponding to each frame is extracted, a spatial distance may be calculated between the eigenvector of each frame and the eigenvector of individual prohibited content. When the calculated spatial distance is less than a specified threshold, the similarity between the frame and the prohibited content is high, and the content of the frame may be determined to be a prohibited content.

In the present embodiment, the player client terminal 300 may include a video sequence synchronization unit 301, a video download unit 302, and a video playing unit 303.

The sequence synchronization unit 301 may be used to retrieve the video sequence number generated in the video server 200, and to store the retrieved video sequence number. In this way, the player client terminal may keep synchronizing with the video sequence number in the video server 200.

The video download unit 302 may sequentially download the sliced video segments from the video server 200 according to an ascending order of the vide sequence numbers, and to store the downloaded video segments. The video segments downloaded by the video download unit 302 may be played by the video playing unit 303. Specifically, the video playing unit 303 may sequentially retrieve the video segments from the video download unit 302 and play the video segments according to the ascending order of the video sequence numbers. For example, after retrieving the video segment of the sequence number 1, the video playing unit 303 may play the video segment of the sequence number 1, and at the same time, may continue to retrieve the video segment of the sequence number 2.

In the present embodiment, the player client terminal 300 may also include a frame skipping unit 304. The frame skipping unit 304 may receive a first sequence number N1 of the latest synchronized video segment sent from the sequence synchronization unit 301, a second sequence number N2 of the most recently downloaded video segment sent from the video download unit 302, and a third sequence number N3 of the currently playing video segment sent from the video playing unit 303. The first sequence number N1 may be the sequence number for the latest video segment in the video server. In the actual application scenario, N1 may often be greater than N2. The reason may be that the sequence synchronization process may only transmit a message indicating the sequence number, in which the amount of data being transmitted is substantially small, therefore the transmission of the synchronization sequence number may be completed quickly. On the other hand, the amount of data involved in downloading the video segment may be fairly large, and the downloading speed of the video segment may be completed slowly consequently. In this way, the player client terminal may complete the synchronization of the video sequence numbers in a short period of time. Thus, the sequence number of the latest synchronized video segment may often be greater than the sequence number of the most recently downloaded video segment. In the actual application scenario, N2 may often be greater than N3 or equal to N3. The reason may be that the video playing unit 303 may retrieve the video segment from the video download unit 302. Thus, the sequence number of the video segment that is played by the video playing unit 303 may never be greater than the sequence number of the most recently downloaded video segment in the video download unit 302.

In the actual application scenario, when the network has fluctuations, at least the following cases may occur.

1) The network between the live video source 100 and the video server may fluctuate, causing the video stream to fail to reach the video server in time. In this case, due to the pause or slowing down of the video stream, the rate of the video segment sequencing may pause or slow down accordingly. Consequently, the increasing rate of N1 may pause or slow down. On the other hand, because the network between the player client terminal 300 and the video server 200 operates normally, N2 and N3 may increase at a normal rate. Thus, when N2 gradually approaches N1 until N2 is equal to N1, the player client terminal may no longer be able to retrieve data from the video server. At this point, the player client terminal 300 may initiate an invalid back-to-source request to the video server 200.

2) The network between the video server 200 and the player client terminal 300 may fluctuate, causing the player client terminal to fail to download the video segments in time. At this point, because the video sequence number synchronization is designed to contain a small amount of data, the increasing rate of N1 may not be affected, and N1 may increase normally. On the other hand, because the downloading speed is slowed down, the increasing rate of N2 may be slowed down. Because the player client terminal 300 may play the downloaded video segments at a normal rate, N3 may increase normally. Consequently, the difference between N1 and N2 may increase more and more, and the difference between N2 and N3 may decrease more and more. When N3 is equal to N2, the user may view frequently paused images because the player client terminal 300 only plays the video content to the user after the download is completed. In this case, although the player client terminal 300 does not initiate any invalid back-to-source request to the video server 200, the user viewing experience may be substantially affected. In addition, even if the network is recovered from disruption, the difference between N1 and N2 has become substantially large such that a substantially large delay between the content that is viewed by the user and the content that is currently recorded by the main broadcast client terminal may exist. The video streaming may no longer be live.

The two examples are intended to be illustrative in the present disclosure, and are not intended to limit the scope of the present disclosure. The actual application scenarios may be more than the two examples.

Therefore, the player client terminal 300 may determine a target video segment to jump to based on the first sequence number N1, the second sequence number N2, and the third sequence number N3. The target video segment and the video segment that is being played currently may have a certain interval in-between. Therefore, after the target video segment is determined, the player client terminal 300 may jump from the video segment that is being played currently to the target video segment and continue to play. The purpose of the process is to keep the video segment that is being played currently and the video segment that has been most recently assigned with a sequence number consistently separated by a certain interval. On one hand, the process may ensure that no invalid back-to-source request may be generated due to lack of video segment to play. On the other hand, the process may ensure that the user views the live video in real-time. In addition, the process may allow sufficient time for the video server 200 to complete the auditing of the video stream.

In the present embodiment, the frame skipping unit 304 may determine frame skipping information based on the first sequence number N1, the second sequence number N2, and the third sequence number N3. The frame skipping information may include frame skipping method, the sequence number of the target video slide, or both. The frame skipping method may include backward frame skipping or forward frame skipping.

Specifically, the frame skipping method may be represented by a number. For example, 1 represents forward frame skipping, -1 represents backward frame skipping, and 0 represents no frame skipping. In the present embodiment, the frame skipping unit 304 may include a frame skipping method determination module. The frame skipping method determination module may calculate a frame skipping value based on the first sequence number N1, the second sequence number N2, and the third sequence number N3. Specifically, in the present embodiment, the frame skipping value may be calculated through function fitting. For example, the result of function fitting may be as follows:

$$ X = a \cdot N1 + b \cdot N2 + c \cdot N3 + D , $$

where X denotes the frame skipping value, a, b, and c denote fitting coefficients respectively, D denotes an offset value.

In the present embodiment, the fitting coefficients and the offset value may be constants. For example, the coefficients may be 1, -1, and 0, and the offset value may be 0. In this way, assuming that N1 (parameter value, the same below) is 30, N2 (parameter value, the same below) is 15, and N3 (parameter value, the same below) is 13, the frame skipping value may be calculated to be 15. In the present embodiment, a first threshold and a second threshold may refer to a maximum value and a minimum value, respectively, of the difference between the download second sequence number and the video server first sequence number.

In the present embodiment, the frame skipping value may be compared with the first threshold and the second threshold, respectively. The first threshold may be greater than the second threshold. When the frame skipping value is greater than the first threshold, the forward frame skipping may be performed to reduce the difference between the first sequence number N1 and the third sequence number N3. When the frame skipping value is smaller than the second threshold, the backward frame skipping may be performed to increase the difference between the first sequence number N1 and the third sequence number N3. When the frame skipping value is between the first threshold and the second threshold, no frame skipping is performed.

For example, the threshold may be 10, and the second threshold may be 3. In this way, the frame skipping value may be calculated to be 15, which is greater than the first threshold, therefore the frame skipping method may be determined to be the forward frame skipping. The purpose of the forward frame skipping is, the most recently assigned sequence number for the video segment may be 30, the sequence number of the most recently downloaded video segment is merely 15, and the sequence number of the currently played video segment is merely 13, which means the difference between the sequence number of the most recently downloaded video segment and the sequence number of the currently recorded video segment by the main broadcast client terminal may be too large, live broadcast is not considered as real-time. At this time, the forward frame skipping process is directly performed, that is, playing a video segment near N1 to ensure that the live video is in real-time. Thus, the method may solve the problem that the live broadcast is not in real-time as described in the aforementioned case 2.

In another example, assuming that N1 is 30, N2 is 28, and N3 is 26, the frame skipping value may be calculated to be 2, which is smaller than the second threshold. Thus, the frame skipping method may be determined to be the backward frame skipping. The purpose of the backward frame skipping is, the most recently assigned sequence number for the video segment may be 30, the sequence number of the most recently downloaded video segment is 28, and the sequence number of the currently played video segment may reach 26. The sequence number of the currently played video segment may be extremely close to the sequence number of the latest video segment that is pushed by the main broadcast client terminal. In this way, the video segment that is pushed by the main broadcast client terminal may not have time to be audited before being played. N2 may be even too close to N1 to cause initiation of invalid back-to-source request. Therefore, according to the solution of the present disclosure, the backward frame skipping process is adopted to play a video segment far away from the video segment of N1 to maintain a certain interval between the currently played video segment and the latest video segment that is pushed by the main broadcast client terminal. Thus, the backward frame skipping process may not only allocate the time for auditing the video segment, but also avoid the initiation of the invalid back-to-source request due to lack of video content to be played.

In the present embodiment, after the frame skipping method is determined, the target video segment may further be determined. Specifically, the frame skipping unit 304 may include a target video segment determination module. The target video segment determination module is configured to calculate a target sequence number based on the first sequence number N1, the second sequence number N2, and the third sequence number N3, to perform the frame skipping process to jump to the target sequence number according to the frame skipping method, and to assign a video segment that corresponds to the target sequence number as the target video segment. Similarly, in the present embodiment, the target sequence number may be calculated through function fitting. For example, the result of function fitting may be as follows:

$$Y = d \cdot N1 + e \cdot N2 + f \cdot N3 - H,$$

where Y denotes the target sequence number, d, e, and f denote fitting coefficients respectively, H denotes a delay parameter.

In the present embodiment, the fitting coefficients and the specified delay parameter may be constants. For example, the coefficients may be 1, 0, and 0, and the specified delay parameter may be 6. In this way, assuming that N1 is 30, N2 is 15, and N3 is 13, the target sequence number may be calculated to be 30 - 6 = 24. Based on the calculation, the frame skipping process may jump to the video segment with the sequence number 24. Thus, the downloading and playing may start at the video segment with the sequence number 24 to reduce the interval between the currently played video segment and the video segment with the most recently assigned sequence number, and to ensure that the live video streaming is in real-time.

What need to be explained is, the target sequence number may be a sequence number that includes a delay based on the specified delay parameter. In the actual application scenario, the specified delay parameter may be 0, which is not limited by the present disclosure. In other words, the target video segment determination module may calculate the target sequence number based on the first sequence number N1, the second sequence number N2, and the third sequence number N3, perform the frame skipping process to jump to the target sequence number according to the frame skipping method, and assign a video segment that corresponds to the target sequence number as the target video segment. In addition, the target video segment determination module may subtract the specified delay parameter from the calculated target sequence number to obtain the delayed target sequence number, perform the frame skipping process to jump to the delayed target sequence number according to the frame skipping method, and assign the video segment that corresponds to the delayed target sequence number as the target video segment.

In the present embodiment, after the target video segment is determined, when the sequence number of the target video segment is different from the sequence number of the currently played video segment, the player client terminal 300 may jump from the currently played video segment to the target video segment and continue to play.

In the present embodiment, the frame skipping unit 304 may also be used to send the sequence number of the target video segment to the video download unit 302. In this way, the video download unit 302 may locate the sequence number of the target video segment based on the frame skipping method, and start to download the video segment from the sequence number of the target video segment.

What need to be explained is, in order to ensure the legitimacy of the live video streaming, when the auditing unit 202 according to the present disclosure recognizes that the content is prohibited, the auditing unit 202 may send stop instructions to the video sequencing unit 203 and the player client terminal 300 to stop slicing and sequencing at the video sequencing unit 203, and to stop playing video at the player client terminal 300.

Embodiment 2

The present disclosure also provides a player client terminal for implementing the live video synchronization. The player client terminal may keep communication connection to the video server. The player client terminal may be used to keep synchronizing the video sequence number with the video server. Each video sequence number may correspond to a video segment. The video segment to be played may be downloaded from the video server. Based on the first sequence number of the latest synchronized video segment, the second sequence number of the most recently downloaded video segment, and the third sequence number of the currently played video segment, the player client terminal may determine the target video segment to jump to, and may jump from the currently played video segment to the target video segment and continue to play.

In the present embodiment, the player client terminal may include a sequence synchronization unit, a video download unit, and a video playing unit.

The sequence synchronization unit may be used to retrieve the video sequence number generated in the video server, and to store the retrieved video sequence number.

The video download unit may be used to sequentially download the divided video segments from the video server according to an ascending order of the video sequence numbers, and to store the downloaded video segments.

The video playing unit may be used to retrieve the downloaded video segment from the video download unit, and to play the downloaded video segment.

In the present embodiment, the player client terminal may also include a frame skipping unit. The frame skipping unit may receive a first sequence number of the latest synchronized video segment from the sequence synchronization unit, a second sequence number of the most recently downloaded video segment from the video download unit, and a third sequence number of the currently playing video segment from the video playing unit. Frame skipping information may be determined based on the first sequence number, the second sequence number, and the third sequence number. The frame skipping information may include a frame skipping method, a sequence number for the target video segment, or both. The frame skipping method may be backward frame skipping or forward frame skipping.

In the present embodiment, the frame skipping unit may include a frame skipping method determination module. The frame skipping method determination module may calculate a frame skipping value based on the first sequence number, the second sequence number, and the third sequence number, and may compare the frame skipping value with a first threshold and a second threshold, respectively. The first threshold may be greater than the second threshold. When the frame skipping value is greater than the first threshold, the frame skipping method may be determined to be the forward frame skipping to reduce the difference between the first sequence number and the third sequence number. When the frame skipping value is smaller than the second threshold, the frame skipping method may be determined to be backward frame skipping to increase the difference between the first sequence number and the third sequence number.

In the present embodiment, the frame skipping unit may also include a target video segment determination module. The target video segment determination module is configured to calculate a target sequence number based on the first sequence number, the second sequence number, and the third sequence number, to perform the frame skipping process to jump to the target sequence number according to the frame skipping method, and to assign the video segment that corresponds to the target sequence number as the target video segment.

In the present embodiment, the frame skipping unit may also include a delay parameter configuration module, which is used to subtract a specified delay parameter from the calculated target sequence number to obtain the delayed target sequence number, to perform the frame skipping process to jump to the target sequence number according to the frame skipping method, and to assign the video segment that corresponds to the target sequence number as the target video segment.

In the present embodiment, the frame skipping unit may be used to send the frame skipping method, the sequence number of the target video segment, or both to the video download unit.

Accordingly, the video download unit may be used to locate the sequence number of the target video segment based on the frame skipping method, and to start downloading the video segment from the sequence number of the target video segment.

Embodiment 3

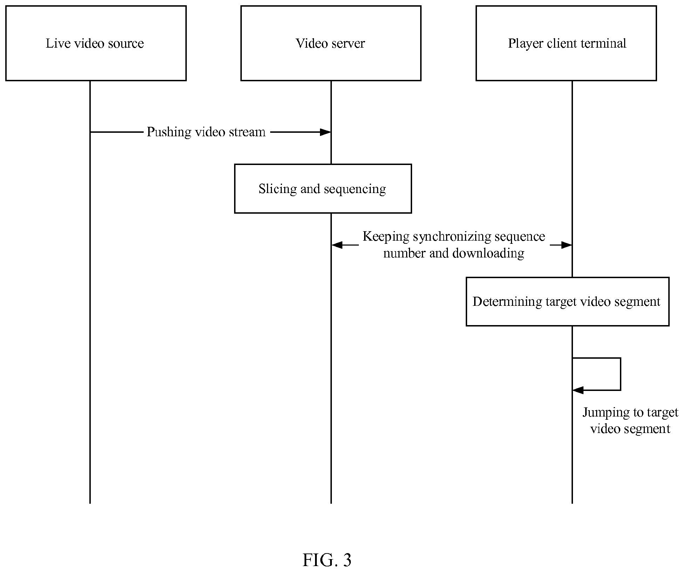

Referring to FIG. 3, the present disclosure also provides method for implementing the live video synchronization. The method may include the followings.

Step S1: pushing video stream from a live video source to a video server;

Step S2: slicing the video stream into video segments, and assigning video sequence numbers to the video segments after slicing in a chronological order by the video server;

Step S3: keeping synchronizing a player client terminal with the video sequence number in the video server, and downloading the video segment to be played from the video server by the player client terminal; and

Step S4: determining a target video segment to jump to based on the first sequence number of the latest synchronized video segment, the second sequence number of the most recently downloaded video segment, and the third sequence number of the currently played video segment, and jumping from the currently played video segment to the target video segment and continuing to play by the player client terminal.

In the present embodiment, the method may also include:

the player client terminal determining frame skipping based on the first sequence number, the second sequence number, and the third sequence number, where the frame skipping information includes a frame skipping method, a sequence number of the target video segment, or both, and the frame skipping method includes backward frame skipping or forward frame skipping.

In the present embodiment, the frame skipping method may be determined as follows:

based on the first sequence number, the second sequence number, and the third sequence number, calculating a frame skipping value and comparing the frame skipping value with a first threshold and a second threshold, respectively; where the first threshold is greater than the second threshold; and

when the frame skipping value is greater than the first threshold, determining the frame skipping method to be forward frame skipping to reduce the difference between the first sequence number and the third sequence number; when the frame skipping value is smaller than the second threshold, determining the frame skipping method to be backward frame skipping to increase the difference between the first sequence number and the third sequence number.

In the present embodiment, the target video segment may be determined as follows:

based on the first sequence number, the second sequence number, and the third sequence number, calculating a target sequence number, performing the frame skipping process to jump to the target sequence number according to the frame skipping method, and assigning a video segment that corresponds to the target sequence number as the target video segment.

In the present embodiment, the method may also include:

subtracting a specified delay parameter from the calculated target sequence number to obtain a delayed target sequence number, performing the frame skipping process to jump to the delayed target sequence number according to the frame skipping method, and assigning a video segment that corresponds to the delayed target sequence number as the target video segment.

In the present embodiment, the method may also include:

based on the frame skipping method, locating the sequence number of the target video segment, and starting to download the video segment from the sequence number of the target video segment.

Therefore, in the present disclosure, the video server may slice the video stream pushed by the live video source into video segments and may assign sequence numbers to the sliced video segments in the chronological order. Based on the sequence number of the video segment, the location of the video segment in the entire video stream may be determined consequently. When the player client terminal plays the live content, the player client terminal may keep synchronizing with the video sequence number in the video server. Thus, the player client terminal may store the first sequence number of the latest synchronized video segment. In addition, when the player client terminal downloads the video segment from the video server, the player client terminal may record the second sequence number of the most recently downloaded video segment. At the same time, when the player client terminal plays the video segments in the chronological order, the player client terminal may record the third sequence number of the currently played video segment. In the present disclosure, after the first sequence number, the second sequence number, and the third sequence number are analyzed, the target video segment to be played currently may be determined. The target video segment determined in this way may keep a certain delay with the video segment that is most recently assigned with a sequence number in the video server. Thus, after the target video segment is determined, the player client terminal may jump directly from the currently played video segment to the target video segment to constantly ensure that the currently played video segment keep a certain delay with the video segment that is most recently assigned with a sequence number in the video server. As such, the player client terminal may always stay in the state of playing video segments, and may not initiate any invalid back-to-source request to the video server result from no video data can be retrieved so that the workload of the video server may be reduced. In addition, because the currently played video segment keeps a certain delay with the video segment that is most recently assigned with a sequence number in the video server, the video server may have sufficient time to complete the auditing of the video stream pushed from the live video source to ensure the legitimacy of the content played by the player client terminal. Moreover, when the player client terminal pauses due to network fluctuation, the player client terminal may automatically jump to the new target video segment for downloading and playing. Thus, the accumulated delay at the player client terminal due to network fluctuation may be avoided, and the user experience may be improved effectively.

The sequence of the embodiments of the present disclosure are intended to be descriptive, and do not represent any preference.

The system embodiments described above are merely for illustrative purpose. The units described as separated parts may or may not be physically detached. The parts displayed as units may or may not be physical units, i.e., may be located at one place, or distributed at a plurality of network units. Based on the actual needs, a part or all of the modules may be selected to achieve the objective of the embodiments. Those ordinarily skilled in the art may understand and implement the disclosed embodiments without contributing creative labor.

Through the descriptions of various aforementioned embodiments, those skilled in the art may clearly understand that the embodiments may be implemented by means of software in conjunction with an essential common hardware platform, or may be simply implemented by hardware. Based on such understanding, the essential part of the aforementioned technical solutions or the part that contribute to the prior art may be embodied in the form of software products. The software products may be stored in computer readable storage media, such as ROM/RAM, magnetic disk, and optical disk, etc., and may include a plurality of instructions to enable a computer device (may be a personal computer, a server, or a network device) to execute the methods described in various embodiments or parts of the embodiments.

The foregoing are merely certain preferred embodiments of the present disclosure, and are not intended to limit the present disclosure. Without departing from the spirit and principles of the present disclosure, any modifications, equivalent substitutions, and improvements, etc. shall fall within the scope of the present disclosure.

## Claims

1. A player client terminal for implementing live video synchronization, the player client terminal keeping a communication connection with a video server, wherein:

   the player client terminal is configured to keep synchronizing with a video sequence number in the video server wherein each video sequence number corresponds to a video segment; the player client terminal downloads a video segment to be played from the video server; based on a first sequence number of the latest synchronized video segment, a second sequence number of the most recently downloaded video segment, and a third sequence number of the currently played video segment, the player client terminal determines a target video segment to jump to, jumps from the currently played video segment to the target video segment, and continues to play.

2. The player client terminal according to claim 1, comprising:

   a sequence synchronization unit configured to retrieve the video sequence number generated in the video server, and to store the retrieved video sequence number; a video download unit configured to sequentially download video segments after slicing from the video server in an ascending order of the video sequence numbers, and to store the downloaded video segments; and a video playing unit configured to sequentially retrieve the downloaded video segments from the video download unit in the ascending order of the video sequence numbers, and to play the downloaded video segments accordingly.

3. The player client terminal according to claim 2, further including a frame skipping unit, wherein:

   the frame skipping unit is configured to receive the first sequence number of the latest synchronized video segment from the sequence synchronization unit, the second sequence number of the most recently downloaded video segment from the video download unit, and the third sequence number of the currently played video segment from the video playing unit; the frame skipping unit determines frame skipping information based on the first sequence number, the second sequence number, and the third sequence number; the frame skipping information includes a frame skipping method, and a sequence number of the target video segment, or both; and the frame skipping method includes backward frame skipping or forward frame skipping.

4. The player client terminal according to claim 3, wherein:

   the frame skipping unit includes a frame skipping method determination module configured to calculate a frame skipping value based on the first sequence number, the second sequence number, and the third sequence number, and to compare the frame skipping value with a first threshold and a second threshold, respectively; the first threshold is greater than the second threshold; when the frame skipping value is greater than the first threshold, the frame skipping unit determines the frame skipping method to be forward frame skipping to reduce the difference between the first sequence number and the third sequence number; and when the frame skipping value is smaller than the second threshold, the frame skipping unit determines the frame skipping method to be backward frame skipping to increase the difference between the first sequence number and the third sequence number.

5. The player client terminal according to claim 3, wherein:
the frame skipping unit includes a target video segment determination module configured to calculate a target sequence number based on the first sequence number, the second sequence number, and the third sequence number, to perform the frame skipping process to jump to the target sequence number according to the frame skipping method, and to assign a video segment that corresponds to the target sequence number as the target video segment.

6. The player client terminal according to claim 5, wherein:
the target video segment determination module includes a delay parameter configuration module configured to subtract a specified delay parameter from the target sequence number that is obtained by calculating to obtain a delayed target sequence number, to perform the frame skipping process to jump to the delayed target sequence number according to the frame skipping method, and to assign a video segment that corresponds to the delayed target sequence number as the target video segment.

7. The player client according to claim 3, wherein:

the frame skipping unit is further configured to send the frame skipping method and the sequence number of the target video segment to the video download unit; and
accordingly, the video download unit is further configured to locate the sequence number of the target video segment according to the frame skipping method, and starts to download video segments from the sequence number of the target video segment.

8. A system for implementing live video synchronization, comprising:

a live video source;
a video server; and
a player client terminal according to any one of claim 1 to 7;
wherein the live video source is configured to push a video stream to the video server, and the video server is configured to slice the video stream into video segments, and to assign a video sequence number to each sliced video segment in a chronological order.

9. The system according to claim 1, wherein the video server further includes:

a video stream receiving unit;
an auditing unit; and
a video sequencing unit, wherein:

the video stream receiving unit is configured to receive the video stream from the live video source, and to send the video stream to the auditing unit and the video sequencing unit, respectively;
the video sequencing unit is configured to slice the video stream into video segments, and to assign a video sequence number to each sliced video segment in a chronological order; and
an auditing unit configured to recognize content of each frame of the video stream, and when the recognized content is prohibited, to send a stop instruction to the video sequencing unit to stop the slicing and sequencing operation, and the player client terminal to stop playing video.

10. A method for implementing live video synchronization, comprising:

pushing a video stream from a live video source to a video server;
the video server slicing the video stream into video segments, and assigning a video sequence number to each video segment after slicing in a chronological order;
keeping synchronizing a player client terminal with the video sequence number in the video server, and downloading a video segment to be played from the video server to the player client terminal; and
the player client terminal, based on a first sequence number of the latest synchronized video segment, a second sequence number of the most recently downloaded video segment, a third sequence number of the currently played video segment, determining a target video segment to jump to, jumping from the currently played video segment to the target video segment, and continuing to play.

11. The method according to claim 10, further including:

the player client terminal, based on the first sequence number, the second sequence number, and the third sequence number, determining frame skipping information, wherein:

the frame skipping information includes a frame skipping method, a sequence number of the target video segment, or both; and
the frame skipping method includes backward frame skipping or forward frame skipping.

12. The method according to claim 11, wherein determining the frame skipping method includes:

based on the first sequence number, the second sequence number, and the third sequence number, calculating a frame skipping value, and respectively comparing the frame skipping value with a first threshold and a second threshold, wherein the first threshold is greater than the second threshold;
when the frame skipping value is greater than the first threshold, determining the frame skipping method to be forward frame skipping to reduce the difference between the first sequence number and the third sequence number; and
when the frame skipping value is smaller than the second threshold, determining the frame skipping method to be backward frame skipping to increase the difference between the first sequence number and the third sequence number.

13. The method according to claim 11, wherein determining the target video segment includes:

based on the first sequence number, the second sequence number, and the third sequence number, calculating a target sequence number;
performing the frame skipping process to jump to the target sequence number according to the frame skipping method; and
assigning a video segment that corresponds to the target sequence number as the target video segment.

14. The method according to claim 13, further including:

subtracting a specified delay parameter from the target sequence number that is obtained by calculating to obtain a delayed target sequence number;
performing the frame skipping process to jump to the delayed target sequence number according to the frame skipping method; and
assigning a video segment that corresponds to the delayed target sequence number as the target video segment.

15. The method according to claim 11, further including:

locating the sequence number of the target video segment according to the frame skipping method; and
starting downloading video segments from the sequence number of the target video segment.

FIG. 1

Video stream

| 1 | 2 | 3 | 4 | 5 | 6 | 7 |
|---|---|---|---|---|---|---|

FIG. 2

| Live video source | Video server | Player client terminal |
|---|---|---|

Pushing video stream →

Slicing and sequencing

← Keeping synchronizing sequence number and downloading →

Determining target video segment

Jumping to target video segment

FIG. 3

# INTERNATIONAL SEARCH REPORT

| International application No. |
|---|
| PCT/CN2017/092764 |

### A. CLASSIFICATION OF SUBJECT MATTER

H04N 21/2187 (2011.01) i; H04N 21/845 (2011.01) i; H04N 21/8547 (2011.01) i

According to International Patent Classification (IPC) or to both national classification and IPC

### B. FIELDS SEARCHED

Minimum documentation searched (classification system followed by classification symbols)

H04N H04L

Documentation searched other than minimum documentation to the extent that such documents are included in the fields searched

Electronic data base consulted during the international search (name of data base and, where practicable, search terms used)

CNPAT; CNKI; WPI; EPODOC; IEEE: 视频, 直播, 服务器, 客户端, 索引, 切片, 编号, 已下载, 序号, 前进, 片段, 播放, 快进, 后退, 跳, 完成下载, 直播, 跳转, 追; server, client, clip+, live, video, cut, segment+, number, index, jump, play+, download, forward, dropback, finish.

### C. DOCUMENTS CONSIDERED TO BE RELEVANT

| Category* | Citation of document, with indication, where appropriate, of the relevant passages | Relevant to claim No. |
|---|---|---|
| X | CN 105847941 A (CNR VIDEO MEDIA CO., LTD.), 10 August 2016 (10.08.2016), claims 1-4, and description, paragraphs [0002]-[0036] | 1-2, 8-10 |
| A | CN 106470352 A (ZTE CORP.), 01 March 2017 (01.03.2017), entire document | 1-15 |
| A | CN 106412719 A (CHINA MOBILE GROUP JIANGSU COMPANY LIMITED), 15 February 2017 (15.02.2017), entire document | 1-15 |
| A | CN 105872807 A (LETV HOLDING GROUP (BEIJING) CO., LTD. et al.), 17 August 2016 (17.08.2016), entire document | 1-15 |
| A | CN 104902145 A (TVMINING (WUXI) MEDIA TECHNOLOGY CO., LTD.), 09 September 2015 (09.09.2015), entire document | 1-15 |
| A | US 2014280784 A1 (GENERAL INSTRUMENT CORP.), 18 September 2014 (18.09.2014), entire document | 1-15 |
| A | WO 2016193052 A1 (NAGRAVISION S.A.), 08 December 2016 (08.12.2016), entire document | 1-15 |

☐ Further documents are listed in the continuation of Box C.    ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 12 February 2018 | 24 February 2018 |

| Name and mailing address of the ISA<br>State Intellectual Property Office of the P. R. China<br>No. 6, Xitucheng Road, Jimenqiao<br>Haidian District, Beijing 100088, China<br>Facsimile No. (86-10) 62019451 | Authorized officer<br><br>HU, Yaqin<br><br>Telephone No. (86-10) 61648233 |

Form PCT/ISA/210 (second sheet) (July 2009)

## INTERNATIONAL SEARCH REPORT
### Information on patent family members

| International application No. |
| --- |
| PCT/CN2017/092764 |

| Patent Documents referred in the Report | Publication Date | Patent Family | Publication Date |
| --- | --- | --- | --- |
| CN 105847941 A | 10 August 2016 | None | |
| CN 106470352 A | 01 March 2017 | WO 2017028675 A1 | 23 February 2017 |
| CN 106412719 A | 15 February 2017 | None | |
| CN 105872807 A | 17 August 2016 | None | |
| CN 104902145 A | 09 September 2015 | CN 104902145 B | 15 December 2017 |
| US 2014280784 A1 | 18 September 2014 | WO 2014145137 A3 | 27 November 2014 |
| | | WO 2014145137 A2 | 18 September 2014 |
| WO 2016193052 A1 | 08 December 2016 | None | |

Form PCT/ISA/210 (patent family annex) (July 2009)